# FASCICULE DE BREVET EUROPEEN

(11) **EP 1 055 854 B1**
(45) Date de publication et mention de la délivrance du brevet: **15.09.2004**
(21) Numéro de dépôt: 00440093.3
(22) Date de dépôt: 05.04.2000
(51) Int. Cl.: F16K 31/06

(54) **Electrovanne à structure monolithique en matériau ferromagnétique**
Elektromagnetisches Ventil mit einer monolitischen Struktur von ferromagnetischem Material
Electromagnetic valve with a monolithic structure of ferromagnetic material

(30) Priorité: 28.05.1999 FR 9906918
(43) Date de publication de la demande: 29.11.2000
(73) Titulaire: SOCIETE CIVILE GROUPA 5, 59300 Valenciennes (FR)
(72) Inventeur: Vinci, René, 6600 Perpignan (FR)
(74) Mandataire: Duthoit, Michel

(56) Documents cités:
- EP-A- 0 481 608
- DE-A- 19 727 414
- US-A- 3 828 818

## Description

La présente invention concerne une nouvelle structure d'électrovanne. Elle concerne plus particulièrement une électrovanne miniature, prévue pour être alimentée sous faible tension, au moyen notamment d'une source d'énergie autonome, du type batterie ou pile. L'invention trouve son application dans tous les domaines où il s'avère utile de bloquer ou de laisser circuler un fluide (liquide ou gaz), et par exemple, mais non exclusivement un fluide sous pression.

Les électrovannes miniatures actuellement disponibles sur le marché comportent de manière usuelle un corps d'électrovanne, qui est généralement en plastique, qui est associé à un clapet et dans lequel sont ménagés un conduit d'admission et un conduit d'échappement d'un fluide. Ces deux conduits d'admission et d'échappement débouchent dans une cavité ouverte du corps de l'électrovanne, cavité dans laquelle est ménagé le siège du clapet. Le clapet se présente sous la forme d'un noyau mobile en translation entre deux positions: une position de fermeture de l'électrovanne dans laquelle le noyau vient s'appliquer contre le siège du clapet en sorte d'obturer l'entrée du conduit d'échappement, et empêcher toute circulation d'un fluide entre le conduit d'admission et le conduit d'échappement; une position d'ouverture de l'électrovanne dans laquelle le noyau n'est pas en contact avec le siège du clapet, un fluide pouvant ainsi circuler entre le conduit d'admission et le conduit d'échappement. Pour assurer la fermeture étanche de l'entrée du conduit d'échappement, la face du noyau qui vient en contact avec le siège du clapet est pourvue d'un tampon élastomère.

Le déplacement du noyau entre les positions de fermeture et d'ouverture de l'électrovanne est commandé par des moyens électromagnétiques. De préférence, le noyau coopère avec un ressort de rappel qui le ramène dans sa position de fermeture, en l'absence de sollicitation des moyens électromagnétiques, et les moyens électromagnétiques, lorsqu'ils sont sollicités, provoquent le déplacement du noyau à fonction de clapet et son maintien en position d'ouverture de l'électrovanne. Les moyens électromagnétiques se présentent sous la forme d'une bobine génératrice d'un champ magnétique associée à un circuit magnétique qui permet de canaliser le flux magnétique généré par la bobine.

La bobine est réalisée au moyen d'un ou plusieurs fils électriquement conducteurs qui sont enroulés sur une carcasse cylindrique, et qui sont prévus pour être alimentés par un courant électrique. La carcasse cylindrique est creuse en étant ouverte à ses deux extrémités, et est réalisée dans un matériau isolant, tel que par exemple du plastique. L'une des deux extrémités ouvertes de la carcasse est positionnée en vis à vis du siège du clapet de l'électrovanne, l'autre extrémité ouverte étant obturée de manière étanche par un bouchon rapporté. Le noyau à fonction de clapet est logé en partie dans la carcasse cylindrique.

Le circuit magnétique de l'électrovanne est généralement constitué de trois pièces distinctes en matériau ferromagnétique, par exemple en fer doux: le bouchon précité, une armature en forme de U, dont la base vient au contact du bouchon et dont les deux branches s'étendent sensiblement parallèlement à l'axe de la bobine, et une bague qui relie les deux branches de l'armature en U, qui est appliquée contre l'extrémité ouverte non obturée de la carcasse de la bobine, et qui est traversée par le noyau à fonction de clapet.

Les électrovannes précitées présentent une structure relativement complexe, qui rend leur fabrication coûteuse. Egalement l'étanchéité de ces électrovannes, qui est indispensable pour éviter toute fuite du fluide en circulation dans l'électrovanne, est difficile à réaliser et nécessite la mise en oeuvre de trois joints d'étanchéité : un premier joint monté sur la périphérie du bouchon du circuit magnétique pour réaliser l'étanchéité entre ce bouchon et la carcasse de la bobine; un deuxième joint assurant l'étanchéité entre la carcasse de la bobine et la bague du circuit magnétique; un troisième joint assurant l'étanchéité entre la bague du circuit magnétique et le corps de l'électrovanne.

Par ailleurs, dans une électrovanne miniature, le volume disponible pour la bobine est faible, et qui plus est cette bobine est généralement alimentée avec un courant de faible intensité délivré par exemple par une pile. Il en résulte que le champ magnétique créé par la bobine est faible et autorise un fonctionnement de l'électrovanne avec une course maximale du noyau à fonction de clapet, qui est faible et qui est typiquement inférieure à 0,25 mm. Or après un certain nombre de cycles de fonctionnement d'une électrovanne, le tampon élastomère du noyau a tendance à se déformer en se creusant sous l'effet des contacts répétitifs avec le siège du clapet, ce qui a pour effet dans le temps d'augmenter la course du noyau. Il peut arriver que cette course devienne supérieure à la course maximale autorisée pour le noyau, ce qui se traduit dans ce cas par un dysfonctionnement de l'électrovanne.

On connaît, par le document DE 197 24 414, une électrovanne, destinée à une utilisation dans des soupapes d'injection de carburant pour moteurs à combustion interne, et qui comprend un corps métallique présentant une structure monolithique. Si une telle soupape résout les problèmes d'étanchéité du fait que la structure monolithique permet de s'affranchir de joints, elle n'est pas adaptée pour obtenir un déplacement maximal du noyau tout en étant alimentée par un courant faible.

L'invention a pour objet une nouvelle structure d'électrovanne miniature, prévue pour être alimentée sous faible tension, au moyen notamment d'une source d'énergie autonome, du type batterie ou pile, qui permet d'obtenir pour la commande du déplacement du noyau, un champ magnétique d'intensité plus élevée, et par là-même d'augmenter la course maximale autorisée pour le noyau.

L'électrovanne de l'invention est connue en ce quelle comporte :
- un conduit d'admission et un conduit d'échappement d'un fluide,
- un noyau mobile à fonction de clapet, qui permet en fonction de sa position de bloquer ou de laisser circuler un fluide entre le conduit d'admission et le conduit d'échappement,
- des moyens électromagnétiques qui permettent de commander le déplacement du noyau, comprenant une structure monolithique qui est en matériau ferromagnétique, et dans laquelle sont ménagés d'une part une cavité servant de logement au noyau à fonction de clapet et d'autre part au moins l'un des deux conduits d'admission ou d'échappement, lequel conduit débouche dans ladite cavité, et au moins une armature en matériau ferromagnétique qui relie les deux extrémités polaires de la structure monolithique
- et des moyens électromagnétiques qui permettent de commander le déplacement du noyau.

De manière caractéristique selon l'invention, les moyens électromagnétiques comportent.
- au moins un fil électriquement conducteur qui est enroulé directement sur la structure monolithique, et qui est destiné à être alimenté par un courant électrique,

L'armature qui permet avec la structure monolithique de former un circuit magnétique fermé peut être fixée à demeure sur la structure monolithique, ou être séparée et prévue dans le système utilisant l'électrovanne, par exemple sous la forme d'un socle au contact du lequel on vient appliquer les extrémités polaires de la structure monolithique lors de la mise en oeuvre de l'électrovanne.

La structure monolithique fait office à la fois de carcasse de bobine tout en faisant partie du circuit magnétique de l'électrovanne. Etant donné que dans l'électrovanne de l'invention, la carcasse de la bobine est en matériau ferromagnétique, d'une part lors de l'alimentation du fil de la bobine, le champ magnétique créé par le fil bobiné induit, dans la structure monolithique en matériau ferromagnétique, un champ magnétique supplémentaire qui vient s'ajouter au champ magnétique de la bobine.

Selon l'invention, on réduit l'entrefer entre le noyau et l'enroulement de la bobine comparativement aux électrovannes de l'art antérieur précédemment décrites. On augmente ainsi l'intensité du champ magnétique global qui est créé, et par là-même la force électromagnétique appliquée au noyau pour son déplacement contrairement à ce qui est obtenu avec les électrovannes de l'art antérieur qui mettent en oeuvre une carcasse de bobine isolante, qui d'une part ne permet pas l'induction de ce champ magnétique supplémentaire, et qui d'autre part oblige le champ magnétique à traverser une surface à très faible perméabilité magnétique (carcasse isolante de la bobine, ou bien porte-enroulement isolant dans le cas de l'électrovanne du document DE 197 24 414). L'obtention d'un champ magnétique d'intensité plus élevé permet avantageusement de réaliser une électrovanne dont le noyau peut présenter une course maximale plus importante, ce qui permet de fiabiliser le fonctionnement dans le temps de l'électrovanne.

Les caractéristiques et avantages de l'invention apparaîtront plus clairement à la lecture de la description ci-après, donnée à titre d'exemple non limitatif, et en référence aux dessins annexés sur lesquels:
- la figure 1 représente une vue schématique en coupe longitudinale d'un premier mode de réalisation d'une électrovanne selon l'invention, présentant une structure monolithique ferromagnétique formée par l'assemblage étanche de deux pièces,
- la figure 2 représente une vue schématique en coupe longitudinale d'un second mode de réalisation d'une électrovanne de l'invention, dans laquelle la structure monolithique ferromagnétique est réalisée en une seule pièce,
- la figure 3 représente une variante préférée de réalisation d'un enroulement multifilaire pour constituer la bobine génératrice du champ magnétique,
- la figure 4 représente une variante d'un conduit d'admission muni de moyens de filtration du fluide à l'admission,

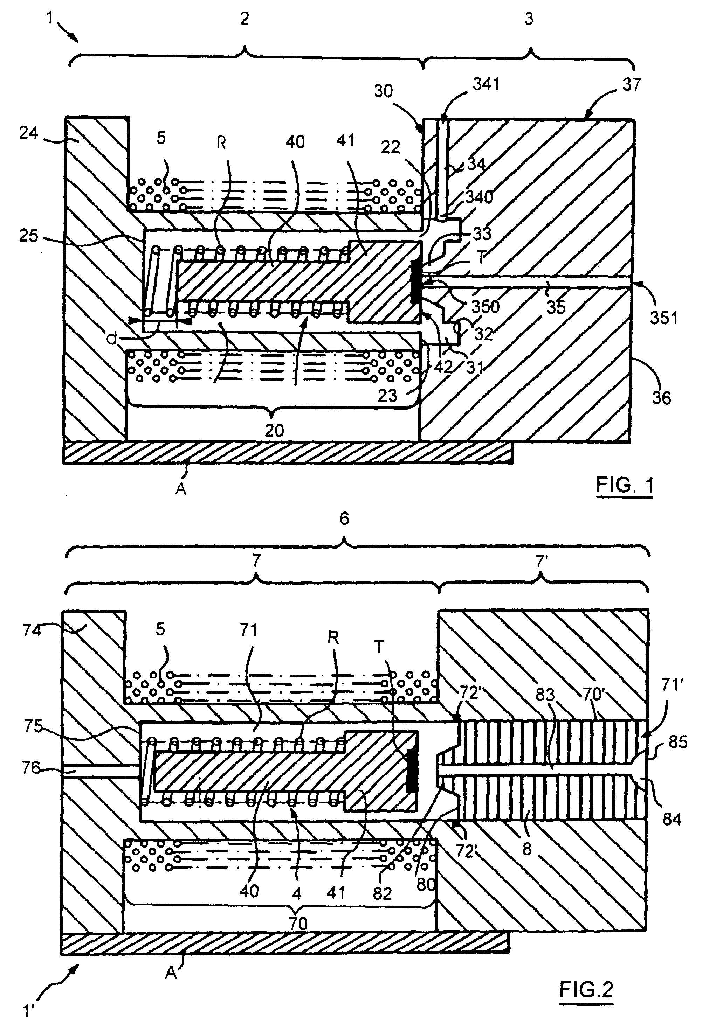

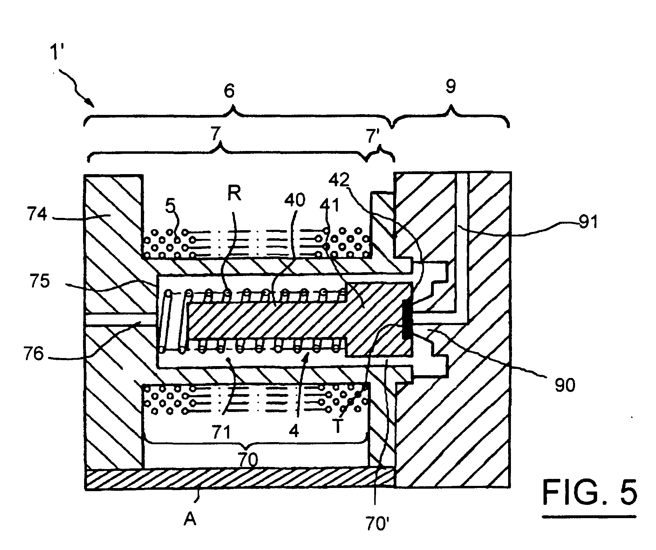

- la figure 5 représente une vue schématique en coupe longitudinale d'une variante du second mode de réalisation d'une électrovanne selon l'invention, dans laquelle la structure monolithique ferromagnétique est réalisée en une seule pièce. En référence à la figure 1, dans un premier mode de réalisation, l'électrovanne 1 comporte une structure monolithique constituée par l'assemblage de deux pièces 2 et 3, qui sont réalisées en matériau ferromagnétique, par exemple en fer doux. La première pièce 2 comporte une première partie cylindrique 20 qui est évidée en sorte de former une cavité intérieure cylindrique 3. Cette cavité 21 présente une ouverture d'accès 22 qui est réalisée dans la face avant 23 de la partie cylindrique 20. A l'opposé de cette face avant 23, la partie cylindrique 20 se prolonge par une portion arrière 24 qui est pleine, et qui de préférence forme un épaulement par rapport à la portion centrale 20. Dans l'exemple particulier illustré, cette portion arrière 24 est de forme rectangulaire ou carrée.

A l'intérieur de la cavité 21 est logé un noyau métallique 4 à fonction de clapet qui prend appui sur le fond 25 de la cavité 21, par l'intermédiaire d'un ressort de rappel R. Dans l'exemple illustré, la partie arrière 40 du noyau présente un diamètre plus faible et est enfilée sur le ressort R, et la partie avant 41 du noyau forme, par rapport à la partie arrière 40 un épaulement sur lequel vient prendre appui le ressort de rappel R. Sur la face avant 42 du noyau 4 est prévu un tampon élastomère T qui est fixé, par exemple en étant collé, dans un renfoncement prévu dans la face avant 42 du noyau 4.

La deuxième pièce 3 en matériau ferromagnétique se présente sous la forme d'une pièce pleine de forme parallélépipédique. Dans une des faces 30 de cette pièce 3 est ménagée une petite cavité ouverte 31 de forme circulaire, dont le fond 6a forme au niveau du centre de la cavité une partie en saillie 33 destinée à former le siège du clapet. Dans cette pièce 3 sont en outre ménagés deux conduits 34 et 35 de circulation d'un fluide. Dans l'exemple illustré, le conduit 34 est rectiligne, traverse de part en part la pièce 3, et débouche à son extrémité 340 à l'intérieur de la cavité 31 de la pièce 3 et à son extrémité opposée 341 dans la face supérieure 37 de la pièce 3. Le conduit 35 est un conduit rectiligne qui traverse également la pièce 3, et qui débouche à une première extrémité 350 au sommet du siège du clapet 33 et à son extrémité opposée 351 dans la face arrière 36 de la pièce 3.

Préalablement à l'assemblage des deux pièces 2 et 3, le noyau 4 à fonction de clapet et son ressort R sont introduits dans la cavité 21 de la portion cylindrique 20 de la pièce 2. Une fois cette opération réalisée, on réalise l'assemblage des pièces 2 et 3 en fixant l'une contre l'autre, par exemple par collage ou par soudure, la face avant 23 de la portion cylindrique 20 et la face avant 30 de la pièce 3, en s'assurant que la liaison entre les deux pièces 2 et 3 est parfaitement étanche. La pièce 3 est positionnée par rapport à la pièce 2 de telle sorte que la cavité intérieure 21 et la cavité intérieure 31 se trouvent dans le prolongement l'une de l'autre, et que le sommet du siège 33 du clapet vient au contact du tampon élastomère T du noyau 4.

La périphérie extérieure de la portion cylindrique 20 comporte un enroulement 5 d'au moins un fil électriquement conducteur 5 formant une pluralité de spires de préférence jointives et superposées. Le ou les fils conducteurs de l'enroulement 5 consistent par exemple en un ou plusieurs fils de cuivre émaillé. Cet enroulement 5 forme avec la portion cylindrique 20 une bobine dont la carcasse constituée par la portion cylindrique 20 est en matériau ferromagnétique. L'enroulement conducteur 5 est prévu pour être alimenté en courant, par exemple au moyen d'une source de tension autonome, du type pile permettant d'appliquer une faible tension continue aux deux extrémités du ou des fils constituant l'enroulement conducteur 5 et de générer un courant dans l'enroulement de la bobine. Avantageusement l'une des deux extrémités du ou des fils sera soudée directement sur la pièce 2, la structure monolithique constituée par les pièces 2 et 3 faisant office de masse.

Lorsqu'un courant d'excitation alimente l'enroulement 5, celui-ci génère un champ magnétique, qui induit, dans la portion 20 en matériau ferromagnétique un champ magnétique supplémentaire venant s'ajouter au champ créé par l'enroulement de la bobine. La structure monolithique se trouve ainsi polarisée, la partie arrière 24 formant une première extrémité polaire tandis que la pièce 3 forme une extrémité polaire opposée. Pour assurer la fermeture du circuit magnétique formé par la structure monolithique, on prévoit une armature A ferromagnétique, en forme de plaque dans l'exemplaire illustré, qui réunit les deux extrémités polaires de la structure monolithique, c'est-à-dire dans l'exemple de la figure 1 la pièce 3 à la partie arrière 24 de la pièce 2. Cette armature A peut être fixée de manière définitive sur la structure monolithique de l'électrovanne. Dans une variante, cette armature peut ne pas être fixée à demeure sur la structure monolithique, mais peut être intégrée au système utilisant l'électrovanne, en formant par exemple un socle sur lequel on vient adapter la structure monolithique de la figure 1.

Le fonctionnement de l'électrovanne 1 est le suivant. En l'absence de courant d'excitation dans l'enroulement conducteur 5, le noyau 4 à fonction de clapet est dans la position illustrée à la figure 1, dite position de fermeture de l'électrovanne. Dans cette position, la tête 41 du noyau 4 est maintenue appliquée, par la force de rappel du ressort R, contre le siège 33 du clapet, le tampon T élastomère venant obturer de manière étanche l'orifice 350 du conduit 35. Dans cette position, aucun fluide (liquide ou gaz) ne peut circuler à l'intérieur de l'électrovanne entre les deux conduits 34 et 35. Il convient de noter que les conduits 34 et 35 peuvent indifféremment faire office de conduit d'admission ou d'échappement du fluide. Lorsque l'enroulement 5 de la bobine est alimenté par un courant d'excitation, le champ magnétique créé par la bobine et celui induit dans la carcasse de la bobine en matériau ferromagnétique (portion cylindrique 20) polarisent la structure monolithique et provoquent le coulissement du noyau 4 vers l'arrière, c'est-à-dire en direction de la partie arrière 24, et à l'inverse de la force de rappel du ressort R qui de ce fait est plus fortement comprimé. Lors de ce mouvement de recul du noyau 4, le tampon élastomère T quitte le siège 33 du clapet et libère l'ouverture 350 du conduit 35, laissant libre le passage d'un fluide entre le conduit 34 et le conduit 35 via les cavités 21 et 31. Tant que le courant d'excitation est maintenu, l'électrovanne reste en position ouverte.

On comprend à la lumière de la description précitée de la figure 1 que comparativement aux électrovannes de l'art antérieur décrites en première partie, l'étanchéité de l'électrovanne de l'invention est plus facile à réaliser puisqu'il suffit dans le mode de réalisation de la figure 1 de s'assurer uniquement de l'étanchéité de la liaison entre les deux pièces 2 et 3, cette étanchéité de surcroît ne nécessitant pas la mise en oeuvre d'un joint torique d'étanchéité, mais pouvant être obtenue directement par le joint de colle ou de soudure entre les deux pièces.

Dans l'électrovanne de l'invention, la carcasse de la bobine de l'électrovanne étant en matière ferromagnétique, et donc thermiquement conductrice, elle permet en outre avantageusement d'évacuer rapidement la chaleur dégagée par le passage du courant dans l'enroulement de la bobine, et par là même d'assurer un meilleur refroidissement de la bobine.

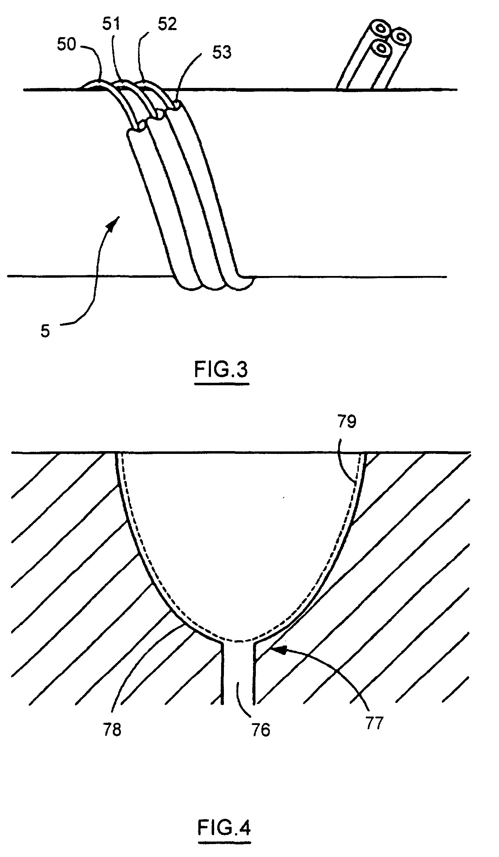

On a représenté également sur la figure 1 par la distance d, la course du noyau 4 qui correspond à la distance qui sépare la partie arrière 40 du noyau 4 du fond 25 de la cavité 21. En cours de fonctionnement de l'électrovanne, cette course d a tendance à augmenter, le tampon élastomère T ayant tendance à se creuser au contact du siège de clapet 33. Grâce à la mise en oeuvre dans l'électrovanne d'une carcasse de bobine (portion cylindrique 20 sur la figure 1) qui est en matériau ferromagnétique, on est en mesure de créer un champ magnétique (résultant de la somme du chemin magnétique créé par la bobine et du champ magnétique induit dans la carcasse) qui est supérieur à celui qui serait créé au moyen d'une bobine dont la carcasse est isolante. On est donc capable de générer un champ magnétique intense et par là même de tolérer une plus grande variation dans le temps de la course du noyau 4 liée à l'usure du tampon T, sans préjudice pour le fonctionnement de l'électrovanne.
En référence à la figure 3, l'enroulement 5 de la bobine est dans une variante formée de trois fils conducteurs 50, 51, 52, dont la structure externe est recouverte d'un matériau isolant 53 et qui sont prévus pour être alimentés en parallèle. Ces trois fils 50, 51, 52, sont avantageusement torsadés pour une question d'encombrement. Ainsi pour un nombre de spires (n) donné, la résistance de l'enroulement 5 est divisée par trois par rapport à un enroulement comportant le même nombre de spires mais composé d'un seul fil. Il s'ensuit que ce type d'enroulement 5 composé de plusieurs fils en parallèle (au moins deux) permet de créer un champ magnétique plus intense.

Un second mode de réalisation d'une électrovanne 1' de l'invention va à présent être décrit en référence à la figure 2.

Le mode de réalisation de la figure 2 se différencie de celui de la figure 1 essentiellement par la mise en oeuvre d'une structure monolithique ferromagnétique qui est réalisée en une seule pièce 6. Cette pièce 6 comporte deux parties 7 et 7'. La partie 7 est similaire sur le plan structurel à la pièce 2 du mode de réalisation de la figure 1, à savoir qu'elle comporte une partie cylindrique 70, une partie arrière 74, une cavité intérieure cylindrique 71, un noyau métallique 4 comprenant une partie arrière 40 et une partie avant 41, un ressort de rappel R, une face avant 42 garnie d'un tampon élastomère T qui est fixé, par exemple en étant collé, dans un renfoncement prévu dans la face avant 42 du noyau 4, à la seule différence près que le conduit d'admission ou d'échappement d'un fluide 76 est ménagé dans la partie arrière 74 et débouche dans la cavité 71 au niveau du fond 75 de cette cavité 71.

La partie 7' a sensiblement la même forme extérieure que la pièce 3 et comporte un évidemment cylindrique 70' qui est situé dans le prolongement et présente un diamètre légèrement supérieur à celui de la cavité 71 de la partie 7. Cet évidemment 70' présente à l'opposé de la cavité 71 une ouverture d'accès 71' permettant l'introduction du noyau 4 et de son ressort R à l'intérieur de la structure monolithique et sa mise en place jusque dans la cavité 71. Dans cet évidemment 70' est serti un insert rapporté 8 de forme cylindrique qui est par exemple en matériau plastique. De préférence la face avant 80 de cet insert rapporté 8 vient en appui contre un épaulement intermédiaire entre la cavité 71 et l'évidement 70', par l'intermédiaire d'un joint d'étanchéité torique 72'. La face avant 80 de cet insert 8 comporte une partie centrale en saillie 82 formant le siège du clapet. Un conduit 83 d'admission ou d'échappement est ménagé en partie centrale de cet insert 8.

Plus particulièrement, dans l'exemple de la figure 2, le conduit 83 se termine par une chambre 84 sensiblement hémisphérique, qui communique avec le conduit 83, et qui à l'opposé est formée par une surface perforée 85. Lorsque le conduit 82 est utilisé comme conduit d'échappement d'un liquide, la chambre 84 et la surface perforée 85 forment une buse permettant la pulvérisation du liquide sous la forme d'une multitude de jets. A l'inverse lorsque le conduit 82 est utilisé comme conduit d'admission, la paroi perforée 85 permet de filtrer le fluide à l'admission.

En référence à la figure 4, dans une variante de réalisation de l'électrovanne, le conduit 76, qui dans cette variante fait office de conduit d'admission, se termine au niveau de son extrémité 77 par une cavité ouverte 78, à l'intérieur de laquelle est monté un élément filtrant 79, tel que par exemple une toile métallique.

La position et la forme des conduits d'admission et d'échappement 34, 35 ou 76 et 83 n'est pas limitative de l'invention. En particulier la position sera choisie en fonction de l'application visée. Plus particulièrement, dans une variante il est envisageable de modifier le mode de réalisation de la figure 2, en utilisant le conduit 83 comme conduit intermédiaire, ce conduit 83 ayant par exemple une forme coudée vers le haut et en faisant communiquer ce conduit 83 avec un conduit supplémentaire (conduit d'admission ou d'échappement) ménagé à travers la pièce 7'.

En référence maintenant à la figure 5, on peut voir une variante de l'électrovanne 1' telle que représentée sur la figure 2, où est mise en oeuvre une structure monolithique ferromagnétique réalisée en une seule pièce, en association avec à une pièce de fermeture 9.

Dans cette variante, on retrouve une structure monolithique ferromagnétique 6 comprenant deux parties 7 et 7'. La partie 7 comprend de manière identique une partie cylindrique 70, une partie arrière 74, une cavité intérieure cylindrique 71, un noyau métallique 4 comprenant une partie arrière 40 et une partie avant 41, un ressort de rappel R, une face avant 42 garnie d'un tampon élastomère T, un conduit d'admission ou d'échappement d'un fluide 76 ménagé dans la partie arrière 74 et qui débouche dans la cavité 71 au niveau du fond 75 de cette cavité 71, et un enroulement 5. En ce qui concerne la partie 7', elle comporte également un évidemment cylindrique 70' qui prolonge la cavité 71, toutefois celui-ci abrite la partie avant 41 du noyau métallique 4 et est fermé par la pièce 9 qui est solidarisée de manière étanche à la partie 7', et de laquelle fait saillie, pour pénétrer au moins partiellement dans l'évidemment cylindrique 70', une partie centrale 90 dans laquelle débouche un conduit 91 d'admission ou d'échappement et contre laquelle peut venir en butée le noyau 4 par l'intermédiaire du tampon T, afin de former le siège du clapet.

On notera qu'il est également possible que les deux conduits d'admission et d'échappement soient réalisés dans la pièce 9, l'un tel que le conduit 91, et l'autre débouchant dans la cavité 70', en regard de la partie centrale 90.

La pièce 9 peut être réalisée dans un matériau non ferromagnétique, et elle peut être solidarisée à la pièce 6 par collage par exemple.

Quel que soit son mode de réalisation, l'invention trouve son application dans tous les domaines où il s'avère utile de réguler la circulation d'un fluide. Elle trouve plus particulièrement mais non exclusivement son application à la réalisation d'aérosols sous pression incorporant une électrovanne de l'invention pour réaliser le mécanisme de pulvérisation.

## Revendications

1. Electrovanne (1; 1') miniature prévue pour être alimentée sous faible tension, au moyen notamment d'une source d'énergie autonome, du type batterie ou pile, comportant :
- un conduit d'admission (34, 35 ; 76 ; 83 ; 91) et un conduit d'échappement (34, 35 ; 76 ; 83 ; 91) d'un fluide,
- un noyau mobile (4) à fonction de clapet, qui permet en fonction de sa position de bloquer ou de laisser circuler un fluide entre le conduit d'admission et le conduit d'échappement,
- des moyens électromagnétiques qui permettent de commander le déplacement du noyau, comprenant une structure monolithique qui est en matériau ferromagnétique, et dans laquelle sont ménagés d'une part une cavité (21, 31 ; 71, 70') servant de logement au noyau (4) à fonction de clapet et d'autre part au moins l'un (34 , 35 ; 76 ; 83 ; 91) des deux conduits d'admission ou d'échappement, lequel conduit débouche dans ladite cavité, et au moins une armature (A) en matériau ferromagnétique qui relie les deux extrémités polaires (24, 3 ; 74, 7') de la structure monolithique,
**caractérisée en ce que** les moyens électromagnétiques comportent au moins un fil (50, 51, 52) électriquement conducteur qui est enroulé directement sur la structure monolithique, et qui est destiné à être alimenté par un courant électrique.

2. Electrovanne (1') selon la revendication 1 **caractérisée en ce que** la structure monolithique est constituée d'une seule pièce (6), et **en ce que** l'électrovanne comporte un insert (8) rapporté qui forme un siège (82) de clapet, qui est fixé de manière étanche à l'intérieur de la cavité (71, 70') de la structure monolithique et qui est traversé par un conduit de circulation (83) du fluide constituant le conduit d'échappement ou d'admission.

3. Electrovanne (1') selon la revendication 1 **caractérisée en ce que** la structure monolithique est constituée d'une seule pièce (6), **en ce que** les deux conduits d'admission et d'échappement sont ménagés dans la pièce formant la structure monolithique, et **en ce que** l'électrovanne comporte un insert rapporté (8) qui forme un siège (82) de clapet, qui est fixé de manière étanche à l'intérieur de la cavité (71, 70') de la structure monolithique et qui est traversé par un conduit de circulation du fluide permettant de faire communiquer le conduit d'admission avec le conduit d'échappement.

4. Electrovanne (1') selon la revendication 1 **caractérisée en ce que** la structure monolithique est constituée d'une seule pièce (6) et **en ce qu'**elle comporte une pièce (9) rapportée et fixée de manière étanche sur ladite structure monolithique, et dont une partie saillante (90), qui forme un siège de clapet, est introduite au moins partiellement dans la cavité (71, 70') et est traversée par au moins un conduit (91) de circulation du fluide constituant le conduit d'échappement ou d'admission.

5. Electrovanne (1) selon la revendication 1 **caractérisée en ce que** la structure monolithique est réalisée au moyen d'une première pièce (2) en matériau ferromagnétique qui comporte une cavité ouverte (21) dans laquelle peut être introduit le noyau (4), et d'une deuxième pièce (3) en matériau ferromagnétique, qui comprend un siège (33) de clapet, et dans laquelle est ménagée au moins l'un des conduits d'admission ou d'échappement (35), et **en ce que** les deux pièces (2, 3) sont fixées de manière définitive et étanche l'une avec l'autre, après mise en place du noyau (4) dans la cavité (21) de la première pièce.

6. Electrovanne (1 ; 1') selon l'une quelconque des revendications 1 à 5, **caractérisée en ce qu'**elle comprend au moins deux fils (50, 51, 52) électriquement conducteurs qui sont enroulés sur la structure monolithique et qui sont prévus pour être alimentés en parallèle.

7. Electrovanne (1 ; 1') selon l'une quelconque des revendications 1 à 6, **caractérisée en ce que** l'une des deux extrémités du ou de chacun des fils est soudée directement sur la surface de structure monolithique.

8. Electrovanne (1 ; 1') selon l'une quelconque des revendications 1 à 7, **caractérisée en ce que** le conduit d'admission est pourvu de moyens (78, 79) permettant de filtrer le fluide à l'admission.

## Patentansprüche

1. Miniaturmagnetventil (1; 1'), vorgesehen, um unter schwacher Spannung insbesondere mit Hilfe einer unabhängigen Energiequelle der Art Akkumulatorenbatterie oder Batteriezelle versorgt zu werden, umfassend:
- eine Zuleitung (34 , 35 ; 76 ; 83 ; 91) und eine Ableitung (34 , 35 ; 76 ; 83 ; 91) für eine Flüssigkeit,
- einen beweglichen Kern (4) mit der Funktion eines Klappenventils, erlaubend in Abhängigkeit von seiner Position, eine Flüssigkeit zwischen der Zuleitung und der Ableitung zu sperren oder strömen zu lassen,
- elektromagnetische Mittel, erlaubend, die Verschiebung des Kerns zu steuern, umfassend eine einstückige Struktur, die aus ferromagnetischem Material ist und in der, einerseits, ein Hohlraum (21, 31 ; 71 , 70'), der dem Kern (4) mit der Funktion eines Klappenventils als Sitz dient, und, andererseits, wenigstens die eine (34, 35 ; 76 ; 83 ; 91) von den beiden Zu- oder Ableitungen, die in dem besagten Hohlraum mündet, ausgeführt sind, und wenigstens ein Gerüst (A) aus ferromagnetischem Material, das die beiden polaren Enden (24, 3 ; 74 , 7') der einstückigen Struktur verbindet,
**dadurch gekennzeichnet, daß** die elektromagnetischen Mittel wenigstens einen elektrischen Stromleiter (50, 51, 52) umfassen, der direkt auf der einstückigen Struktur aufgerollt und vorgesehen ist, durch elektrischen Strom versorgt zu werden.

2. Magnetventil (1') nach Anspruch 1, **dadurch gekennzeichnet, daß** die einstückige Struktur aus einem einzigen Stück (6) gebildet ist, und daß das Magnetventil eine eingebrachte Einlage (8) umfaßt, die einen Sitz (82) des Klappenventils bildet, das im Inneren des Hohlraums (71, 70') der einstückigen Struktur wasserdicht befestigt ist und von einer Umlaufleitung (83) für die Flüssigkeit durchquert wird, welche die Ab- oder Zuleitung bildet.

3. Magnetventil (1') nach Anspruch 1, **dadurch gekennzeichnet, daß** die einstückige Struktur aus einem einzigen Stück 6 gebildet ist, und daß die beiden Zuund Ableitungen in dem die einstückige Struktur bildenden Stück ausgeführt sind, und daß das Magnetventil eine eingebrachte Einlage (8) umfaßt, die einen Sitz (82) des Klappenventils bildet, das im Inneren des Hohlraums (71, 70') der einstückigen Struktur wasserdicht befestigt ist und von einer Umlaufleitung (83) für die Flüssigkeit durchquert wird, erlaubend, daß die Zuleitung mit der Ableitung in Verbindung steht.

4. Magnetventil (1') nach Anspruch 1, **dadurch gekennzeichnet, daß** die einstückige Struktur aus einem einzigen Stück 6 gebildet ist, und daß sie ein Stück (9) umfaßt, das eingebracht und auf der besagten einstückigen Struktur wasserdicht befestigt ist, und dessen hervorstehender Teil (90), der einen Sitz des Klappenventils bildet, wenigstens zum Teil in den Hohlraum (71, 70') eingeführt ist und von wenigstens einer Umlaufleitung (91) für die Flüssigkeit durchquert wird, welche die Ab- oder Zuleitung bildet.

5. Magnetventil (1) nach Anspruch 1, **dadurch gekennzeichnet, daß** die einstückige Struktur wenigstens verwirklicht ist durch ein erstes Stück (2) aus ferromagnetischem Material, das einen offenen Hohlraum (21) umfaßt, in den der Kern (4) eingeführt werden kann, und durch ein zweites Stück (3) aus ferromagnetischem Material, das einen Sitz (33) des Klappenventils umfaßt und in dem wenigstens die eine von den Zu- oder Ableitungen (35) ausgeführt ist, und daß die beiden Stücke (2, 3) miteinander endgültig und wasserdicht befestigt sind, nach der Einführung von Kern (4) in den Hohlraum (21) des ersten Stückes.

6. Magnetventil (1 ; 1') nach irgendeinem der Ansprüche 1 bis 5, **dadurch gekennzeichnet, daß** es wenigstens zwei elektrische Stromleiter (50, 51, 52) umfaßt, die auf der einstückigen Struktur aufgerollt und vorgesehen sind, um parallel gespeist zu werden.

7. Magnetventil (1 ; 1') nach irgendeinem der Ansprüche 1 bis 6, **dadurch gekennzeichnet, daß** das eine der beiden Enden jeweils des Leiters oder der Leiter direkt auf der Oberfläche der einstückigen Struktur geschweißt ist.

8. Magnetventil (1 ; 1') nach irgendeinem der Ansprüche 1 bis 7, **dadurch gekennzeichnet, daß** die Zuleitung mit Mitteln (78 ; 79) versehen ist, erlaubend, die Flüssigkeit bei der Einströmung zu filtrieren.

## Claims

1. A miniature solenoid valve (1; 1') intended to be low-voltage supplied, by means in particular of a stand-alone energy source, of battery type, including:
- an inlet conduit (34, 35; 76; 83; 91) and an exhaust conduit (34, 35; 76; 83; 91) for a fluid,
- a mobile core (4) acting as a flap, which enables according to its position to block or to allow a fluid through between the inlet conduit and the exhaust conduit,
- electromagnetic means which enable to control the displacement of the core, comprising a monolithic structure which is made of ferromagnetic material, and wherein are arranged on the one hand a cavity (21, 31; 71, 70') serving as a housing for the flap-acting core (4) and on the other hand, at least one (34, 35; 76; 83; 91) of both inlet or exhaust conduits, which conduit emerges into said cavity, and at least one reinforcement (A) of ferromagnetic material, linking both polar ends (24, 3; 74, 7') of the monolithic structure.
**characterised in that** the electromagnetic means comprise at least one electrically conductive wire (50, 51, 52) which is wound directly around the monolithic structure, and which is intended to be supplied with electric current.

2. A solenoid valve (1') according to claim 1, **characterised in that** the monolithic structure is composed of a single part (6), and **in that** the solenoid valve comprises an added insert (8) which forms a flap seat (82), which is attached tightly inside the cavity (71, 70') of the monolithic structure and which is traversed by a fluid circulation conduit (83) forming the inlet or exhaust conduit.

3. A solenoid valve (1') according to claim 1, **characterised in that** the monolithic structure is composed of a single part (6), **in that** both inlet and exhaust conduits are provided in the part forming the monolithic structure, and **in that** the solenoid valve comprises an added insert (8) which forms a flap seat (82), which is attached tightly inside the cavity (71, 70') of the monolithic structure and which is traversed by a fluid circulation conduit (83) enabling to communicate the inlet conduit with the exhaust.

4. A solenoid valve (1') according to claim 1, **characterised in that** the monolithic structure is composed of a single part (6), and **in that** it comprises an added insert (8), attached tightly to said monolithic structure, and whereof a protruding portion (90) which forms a flap seat, is inserted at least partially into the cavity (71, 70') and which is traversed by a fluid circulation conduit (91) forming the inlet or exhaust conduit.

5. A solenoid valve (1) according to claim 1, **characterised in that** the monolithic structure is realised by means of a first part (2) of ferromagnetic material, which comprises an open cavity (21) wherein may be inserted the core (4), and of a second part (3) of ferromagnetic material, which comprises a flap seat (33), and wherein is provided at least one of the inlet or exhaust conduits (35), and **in that** both parts (2, 3) are attached permanently and tight with one another, after placing the core (4) into the cavity (21) of the first part.

6. A solenoid valve (1; 1') according to any of the claims 1 to 5, **characterised in that** it comprises at least two electrically conductive wires (50, 51, 52) which are wound around the monolithic structure and which are intended to be supplied in parallel.

7. A solenoid valve (1; 1') according to any of the claims 1 to 6, **characterised in that** one of both ends of the (or of each) wire is welded directly on the surface of the monolithic structure.

8. A solenoid valve (1; 1') according to any of the claims 1 to 7, **characterised in that** the inlet conduit is fitted with means (78, 79) enabling to filter the fluid at inlet.
